# EUROPÄISCHE PATENTSCHRIFT

(11) **EP 0 648 407 B1**
(45) Veröffentlichungstag und Bekanntmachung des Hinweises auf die Patenterteilung: **14.01.1998**
(21) Anmeldenummer: 94116423.8
(22) Anmeldetag: 18.10.1994
(51) Int. Cl.: A01D 78/10

(54) **Heuwerbungsmaschine**
Haymaking machine
Machine de fenaison

(30) Priorität: 18.10.1993 DE 9315879 U
(43) Veröffentlichungstag der Anmeldung: 19.04.1995
(73) Patentinhaber: GREENLAND GMBH & CO. KG, D-78244 Gottmadingen (DE)
(72) Erfinder: Maier, Martin, D-78244 Gottmadingen (DE)
(74) Vertreter: Grünecker, Kinkeldey, Stockmair & Schwanhäusser Anwaltssozietät

(56) Entgegenhaltungen:
- EP-A- 0 345 183
- EP-A- 0 362 670
- EP-A- 0 390 713
- DE-A- 2 833 814
- DE-A- 4 021 812
- DE-U- 9 002 630
- FR-A- 2 315 833

## Beschreibung

Die Erfindung betrifft eine Heuwerbungsmaschine der im Oberbegriff des Patentanspruchs 1 angegebenen Art.

Bei derartigen Heuwerbungsmaschinen, insbesondere Kreiselschwadern, ist es schwierig, die Maschine beim Arbeiten einerseits sauber zu führen und ihr andererseits die nötigen Freiheitsgrade zur Bodenanpassung zu ermöglichen, vor allem dann, wenn wie bei modernen Maschinen dieses Typs mindestens drei Bodenlaufräder vorgesehen sind (DE-A-28 33 814, EP-A-0 362 670). Bei der aus DE-A-28 33 814 bekannten Heuwerbungsmaschine ist am freien Ende des Tragrahmens eine zum Boden in etwa vertikale Gelenkachse vorgesehen, an der das Maschinengestell mit einem Universalgelenk angeschlossen ist, das zumindest eine quer zum Tragrahmen liegende Gelenkachse und eine in Richtung des Tragrahmens liegende Gelenkachse besitzt. Die vertikale Gelenkachse befindet sich in beträchtlichem Abstand von der Kreiselachse der als Kreiselschwader ausgebildeten Maschine, so daß sich die Maschine jeweils mit dem einzelnen Bodenlaufrad der drei Bodenlaufräder in Fahrtrichtung nach vorne einzustellen vermag, abhängig davon, ob die Maschine am Heck gezogen oder an der Front des Schleppers geschoben wird. Da der Tragrahmen mit der Haltevorrichtung des Schleppers zumindest in Querrichtung starr verbunden ist, läßt sich die Heuwerbungsmaschine nicht seitlich ausschwenken, um neben dem Schlepper arbeiten zu können.

Bei der aus EP-A-0 362 670 bekannten Heuwerbungsmaschine, welche die Merkmale des Oberbegriffes des Anspruchs 1 aufweist, ist das Maschinengestell mit dem freien Ende des Tragrahmens mit einer bodenparallelen und quer zur Längsrichtung des Tragrahmens verlaufenden Gelenkachse verbunden. Mit den drei Bodenlaufrädern, die die Maschine auf dem Boden fuhren, würde sich die Maschine an Schräglagen des Bodens anpassen. Jedoch unterdrückt die querliegende Gelenkachse solche Anpaßbewegungen. Höhenausgleichsbewegungen zwischen der Maschine und dem Schlepper werden allenfalls über die Haltevorrichtung am Schlepper ermöglicht. Die Bodenanpassung der Maschine ist dadurch eingeschränkt. Bei einer Ausführungsform ist der Tragrahmen an der Haltevorrichtung des Schleppers (bei Heckanbau) um eine zum Boden senkrechte Achse seitlich ausschwenkbar.

Der Erfindung liegt die Aufgabe zugrunde, eine Heuwerbungsmaschine dieser Art zu schaffen, bei der auf baulich einfache Weise, vor allem beim Arbeiten seitlich des Schleppers der Maschine eine unbehinderte Bodenanpassung möglich ist. Die unbehinderte Bodenanpassung soll auch bei hinter dem Schlepper arbeitender Maschine gegeben sein. Bei hinter dem Schlepper befindlicher und ausgehobener Maschine (Transportlage) sollen unerwünschte Eigenbewegungen der Maschine relativ zum Tragrahmen verhinderbar sein.

Die gestellte Aufgabe wird erfindungsgemäß mit den im Patentanspruch 1 enthaltenen Merkmalen gelöst.

Bei dieser Ausbildung wird eine optimale Bodenanpassung der Maschine, die vorwiegend als gezogener, seitlich neben dem Schlepper arbeitender Seitenschwader eingesetzt wird, erreicht. Die Maschine kann sich in ihrer Neigung relativ zum Zwischengehäuse und in ihrer Höhenlage relativ zum Tragrahmen unbehindert an den Boden anpassen und wird trotzdem sauber in Fahrtrichtung gefuhrt. Zur Höhenanpassung verlagert sich die Maschine mit dem Zwischengehäuse um die Tragrahmen-Gelenkachse. Für horizontale und quer zur Fahrtrichtung freie Bewegungen schwenkt die Maschine um die Maschinengestell-Gelenkachse. Die beiden Bewegungen überlagern einander. Die Abstützung der Maschine auf den Laufrädern, bevorzugt auf drei Laufrädern, gewährleistet ein optimales Arbeiten der Werkzeuge. Der Tragrähmen und der Schlepper beeinflussen das Arbeiten der Maschine so wenig wie möglich; sie dienen nur mehr dazu, der Maschine die Fährbewegung und die Fahrtrichtung vorzugeben bzw. die zum Arbeiten erforderliche Antriebsenergie bereitzustellen. Dies gilt auch dann, wenn die Maschine direkt hinter dem Schlepper arbeitet. In der angehobenen Transportlage läßt sich die für die Bodenanpassung günstige Beweglichkeit der Maschine relativ zum Tragrahmen mit baulich einfachen Mitteln blockieren, um unerwünschte Eigenbewegungen der Maschine zu vermeiden.

Zum letztgenannten Zweck ist bei der Ausführungsform gemäß Anspruch 2 die wahlweise ein- und ausrückbare Blockiervorrichtung vorgesehen, die abgerückt in der Transportlage unerwünschte Eigenbewegungen der Maschine verhindert.

Die Blockiervorrichtung hat bei der Ausführungsform gemäß Anspruch 3 noch eine weitere, wichtige Funktion, weil sie in Arbeitslage der Maschine als Schwenkbegrenzungsvorrichtung ausgebildet ist, die übergroße Schwenkbewegungen des Zwischengehäuses am Tragrahmen einerseits und der Maschine am Zwischengehäuse andererseits verhindert.

Zweckmäßigerweise ist eine Hilfsvorrichtung vorgesehen, die die Laufräder der Maschine unabhängig davon, ob der Tragrahmen in Fahrtrichtung steht oder seitlich ausgeschwenkt ist, jeweils in Fahrtrichtung ausrichtet.

Die Ausführungsform gemäß Anspruch 4 ist besonders zweckmäßig, weil die schräggestellte MaschinengestellGelenkachse bereits mit der Fahrtrichtung fluchtet, wenn der Tragrahmen nicht bis zu einem rechten Winkel gegenüber der Fahrtrichtung seitlich ausgeschwenkt ist, sondern schräg an einem Hinterrad des Schleppers vorbeigreift. Damit wird die Transportlänge der Einheit aus Schlepper und Heuwerbungsmaschine optimal kurz gehalten. Dies ist ein wichtiger Aspekt, wenn der Schlepper nur mit der am Heck angebauten Heuwerbungsmaschine eingesetzt wird. Besonders wichtig ist dieser Aspekt aber dann, wenn der Schlepper zusätzlich auch mit einer an der Schlepperfront angebauten Heuwerbungsmaschine eingesetzt wird, die mit der am Heck angebauten Heuwerbungsmaschine zusammenarbeitet.

Bei der baulich einfachen Ausführungsform gemäß Anspruch 5 wird durch die Begrenzung der Schwenkbewegung des Zwischengehäuses in Senkrichtung das Gewicht der Maschine günstig direkt auf den Tragrahmen übergeleitet.

Die bei der Ausführungsform gemäß Anspruch 6 in den Gelenkbereich integrierte Blockiervorrichtung greift statisch günstig zwischen den beiden Gelenkachsen an und verhindert dann unerwünschte Eigenbewegungen des Maschinengestells bzw. der Maschine am Tragrahmen.

Bei der Ausführungsform gemäß Anspruch 7 übernimmt die Blockiervorrichtung eine weitere Funktion, da sie in Arbeitslage der Maschine die Hochschwenkbewegung des Zwischengehäuses am Tragrahmen begrenzt, sobald die Achse am Widerlager zum Angriff kommt.

Zweckmäßigerweise ist die für die Aufnahme des Riegels bei eingerückter Blockiervorrichtung vorgesehene Riegelaufnahme gleichzeitig als das Widerlager ausgebildet, das in Arbeitslage die Hochschwenkbegrenzung des Zwischengehäuses übernimmt. Dieselben Komponenten erfüllen je nachdem, ob die Blockiervorrichtung ein- oder ausgerückt ist, unterschiedliche Aufgaben.

Die Höheneinstellung der Maschine läßt sich üblicherweise individuell für unterschiedliche Arbeitsbedingungen verändern und wird für das Arbeiten zweckmäßigerweise so vorgenommen, daß die ausgerückte Blockiervorrichtung bzw. die Schwenkbegrenzungsvorrichtung der Maschine die gewünschte Bodenanpassung um die Maschinengestell-Gelenkachse und um die Tragrahmen-Gelenkachse ermöglicht, jedoch kritische oder gefährliche Bewegungen über die vorgewählten Grenzen hinaus unterdrückt.

Eine baulich einfache, robuste und funktionssichere Ausführungsform geht ferner aus Anspruch 9 hervor. Für diese Blockiervorrichtung wird nur wenig Platz im Gelenkbereich benögtigt.

Die Ausführungsform gemäß Anspruch 10 ist zur Aufnahme auch größerer Seitenkräfte ohne Verklemmungsgefahr geeignet.

Bei der Ausführungsform gemäß Anspruch 11 läßt sich die Maschine besonders leichtgängig und verschleißarm um die Maschinengestell-Gelenkachse verschwenken.

Bei der Ausführungsform gemäß Anspruch 12 wird der Schwenkbereich in der Maschine relativ zum Zwischengehäuse auf baulich einfache Weise begrenzt.

Anhand der Zeichnung wird eine Ausführungsform der Erfindung erläutert. Es zeigen:
- Fig. 1: eine schematische Draufsicht auf einen Schlepper mit einer Heuwerbungsmaschine in zwei Lagen,
- Fig. 2: eine Seitenansicht der Maschine von Fig. 1, in Arbeitslage,
- Fig. 3: eine vergrößerte Seitenansicht eines Details aus Fig. 2, in einer blockierten Lage, und
- Fig. 4: eine Draufsicht teilweise im Schnitt zu den Fig. 2 und 3 in nicht blockierter Lage.

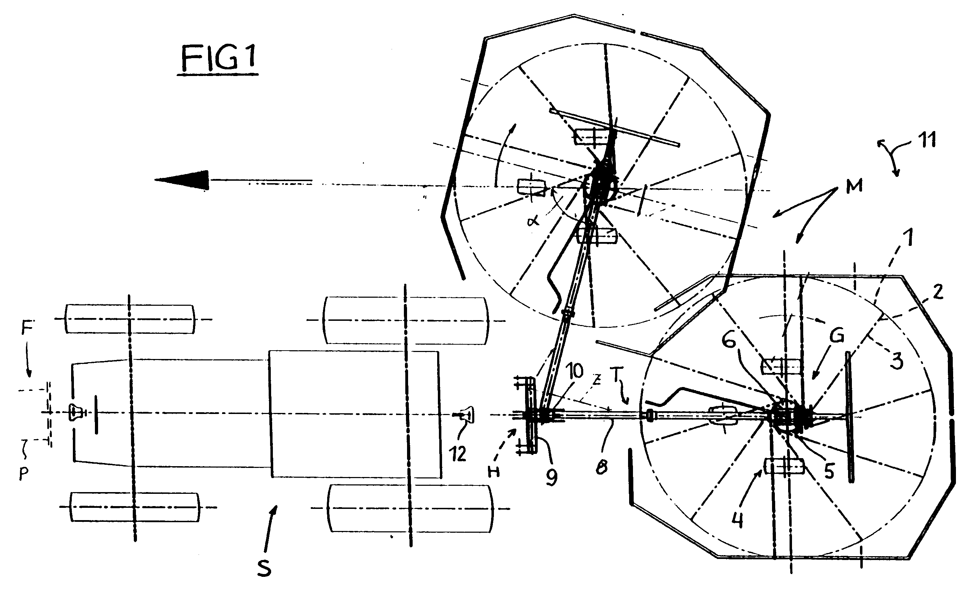

Eine Heuwerbungsmaschine M, z.B. ein Kreiselschwader, ist in Fig. 1 am Heck eines Schleppers S so angebaut, daß sie entweder seitlich neben dem oder hinter dem Schlepper S arbeitet, bzw. in einer ggfs. ausgehobenen, Transportlage hinter dem Schlepper S stabilisiert ist. Die Maschine weist einen Schwadkreisel 1 mit Zinken 2 an Speichen 3 auf. Der Schwadkreisel 1 ist an einem Getriebegehäuse 5 um eine annähernd vertikale Drehachse zur Drehung antreibbar gelagert. Das Getriebegehäuse 5 ist mit einem Oberteil 6 in einem Gelenkbereich G an einem Tragrahmen T angeschlossen, der bei der gezeigten Ausführungsform aus einem Träger 8 besteht. Der Träger 8 ist um eine annähernd vertikale Achse 10 mit einem Anbaurahmen 9 schwenkbar verbunden, der an einer Heck-Dreipunkt-Haltevorrichtung H (wie gezeigt) des Schleppers S befestigt ist. An einer Front-Dreipunkt-Haltevorrichtung F des Schleppers S könnte ferner ein Frontschwader P angebracht sein, der dann mit der Maschine M zusammenarbeitet. Die für den Schwadkreisel 1 erforderliche Antriebsenergie wird an einem Zapfwellenanschluß 12 des Schleppers S abgegriffen. Die Maschine M läßt sich mit dem Tragrahmen T um die Achse 10 in Richtung eines Doppelpfeils 11 zwischen der hinteren Arbeitslage und auch Transportlage und der ausgeschwenkten Arbeitslage hin- und herverschwenken, z.B. mittels eines Zylinders Z. In der Transportlage kann die Maschine M vom Boden abgehoben sein.

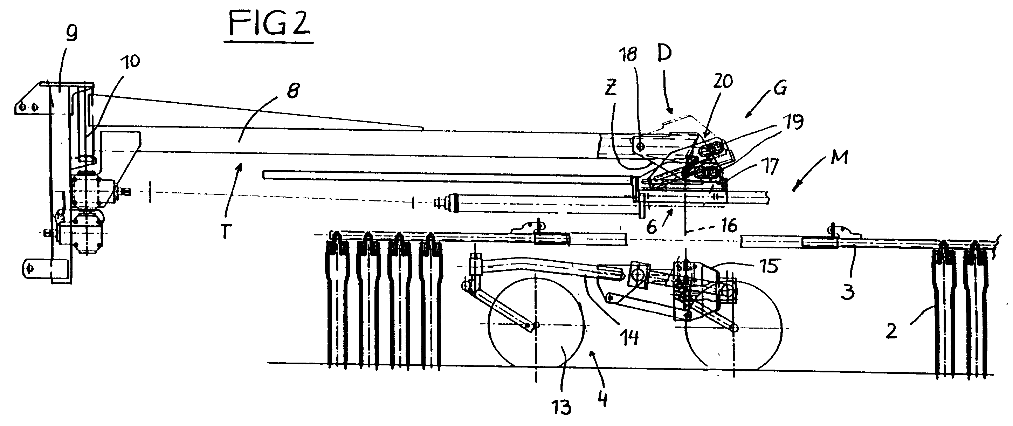

Gemäß Fig. 2 ist im Gelenkbereich G zwischen dem Träger 8 und einem am Oberteil 6 angeordneten Maschinengestell 17 ein Doppelgelenk D vorgesehen, mit dem sich die Maschine M in Arbeitslage an Bodenunebenheiten anzupassen und dabei relativ zum Träger 8 zu verstellen vermag. Das Fahrwerk 4 weist mindestens drei Bodenlaufräder 13, eine Haltekonstruktion 14 für die Bodenlaufräder 13 und einen Antriebsteil 15 auf, der über eine strichpunktiert angedeutete Zinkensteuervorrichtung 16 mit dem Maschinengestell 17 verbunden ist. Die an den Speichen 3 angebrachten Zinken 2 werden beim Umlauf gesteuert verschwenkt.

Im Doppelgelenk D ist ein Zwischengehäuse Z vorgesehen, das am Träger 8 um eine horizontale und quer zur Längsrichtung des Trägers 8 liegende Tragrahmen-Gelenkachse 18 begrenzt auf- und abschwenkbar ist. Im Zwischengehäuse Z ist ferner eine Maschinengestell-Gelenkachse 19 vorgesehen, an der das Maschinengestell 17 begrenzt schwenkbar angelenkt ist. Das Doppelgelenk D enthält eine wahlweise einrückbare Blockiervorrichtung 20, mit der das Maschinengestell 17 in der in Fig. 2 in ausgezogenen Linien gezeigten und annähernd zum Träger 8 parallelen Lage gegenüber dem Träger 8 verblockbar ist (für die Transportlage). Die ausgerückte Blockiervorrichtung 20 ist gleichzeitig als Schwenkbegrenzungsvorrichtung für die Maschine M ausgebildet.

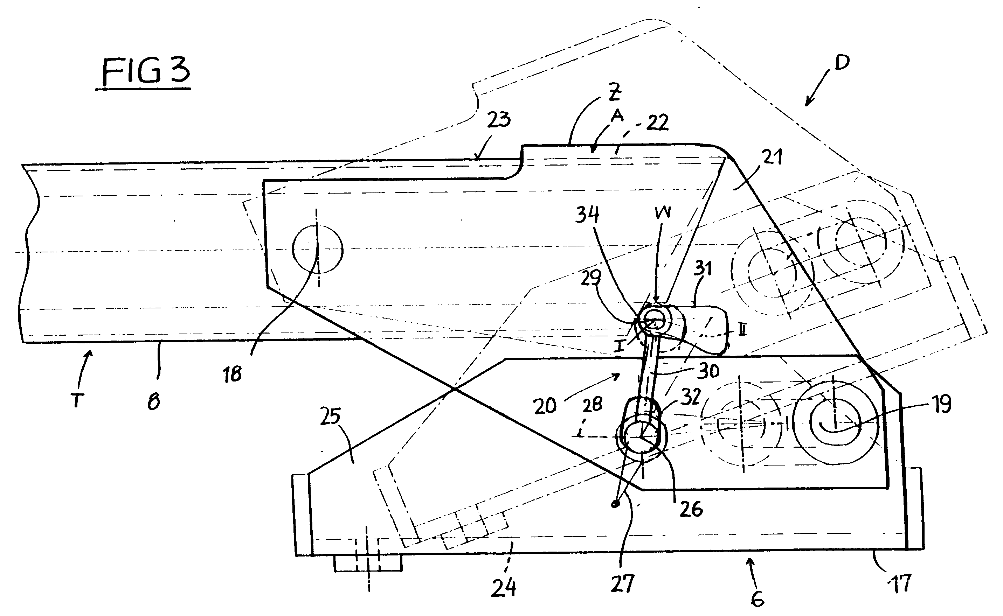

In Fig. 3 ist das Doppelgelenk D in der blockierten Stellung in ausgezogenen Linien gezeigt. Strichpunktierte Linien deuten eine verschwenkte Grenzlage des Zwischengehäuses Z in Arbeitslage der Maschine M bei ausgerückter Blockiervorrichtung 20 an.

Das am freien Ende des Trägers 8 um die Tragrahmen-Gelenkachse 18 schwenkbare Zwischengehäuse Z hat annähernd umgekehrt U-förmigen Querschnitt mit seitlichen Wangen 21 und einem oberen Quersteg 22. Der Quersteg 22 ist auf eine Oberseite 23 des Trägers 8 auflegbar und bildet deshalb einen Begrenzungsanschlag A für die Senkbewegung des Zwischengehäuses. Die Wangen 21 schließen das Trägerende zwischen sich ein.

Das Maschinengestell 17 ist als oben offene Blechwanne mit einem Boden 24 und Seitenteilen 25 ausgebildet, die die Wangen 21 zwischen sich einschließen.

Die Blockiervorrichtung 20 weist einen um eine Achse 26 in den Seitenteilen 25 zwischen einer Blockierstellung I und einer Passivstellung II verschwenkbaren Riegel 29 auf, der mit wenigstens einem Arm 30 mit der Achse 26 verbunden ist. Der Riegel 29 wird durch eine Feder 27 über einen Totpunkt in die Blockierstellung und in die Passivstellung beaufschlagt. Ein Handhebel 28 an der Achse 26 dient ggfs. zum Einrücken und Ausrücken der Blockiervorrichtung 20. Das Einrücken und Ausrücken läßt sich auch durch direkten Angriff am Riegel 29 bewerkstelligen.

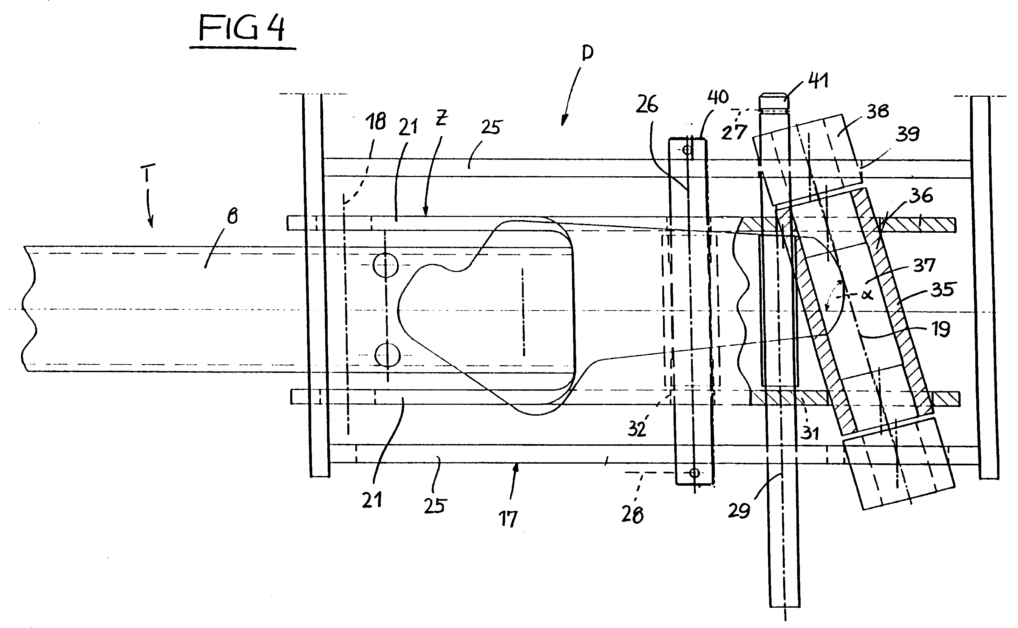

Die Achse 26 wird von einer über beide Seitenteile 25 nach außen ragenden Welle 40 (Fig. 4) gebildet, die in den Wangen 21 Langlöcher 32 durchsetzt, die in etwa konzentrisch zur Maschinengestell-Gelenkachse 19 liegen und die Schwenkbeweglichkeit zwischen dem Maschinengestell 17 und dem Zwischengehäuse Z begrenzen. Der Riegel 29 wird von einem bis über die Seitenteile 25 nach außen ragenden Riegelbolzen 41 gebildet, der in den Wangen 21 vorgesehene, annähernd dreieckige Durchbrüche 31 durchsetzt, die die Blockierstellung I und die Passivstellung II des Riegels 29 definieren. Am vorderen unteren Ende des Trägers 8 ist eine Riegelaufnahme 34 als annähernd V-förmige Vertiefung geformt, in der der Riegel 29 in der in Fig. 3 gezeigten Blockierstellung I zum Eingriff kommt. In der Passivstellung II läßt sich das Maschinengestell 17 mit dem Zwischengehäuse Z entgegen dem Uhrzeigersinn um die Tragrahmen-Gelenkachse 18 verschwenken, bis die Achse 26 (strichliert angedeutet) an einem Widerlager E am Träger 8 abgefangen wird. Das Widerlager W ist baulich in die Riegelaufnahme 34 integriert.

Die Maschinengestell-Gelenkachse 19 liegt bei blockiertem Maschinengestell gemäß Fig. 3 in einer zur Tragrahmen-Gelenkachse 18 parallelen Ebene. Sie ist jedoch schräggestellt, so daß sie mit der Tragrahmen-Gelenkachse 18 einen spitzen Winkel α einschließt. Die Maschinengestell-Gelenkachse 19 wird durch eine Hülse 35 gebildet, die in Bohrungen 36 der Wangen 21 festgelegt ist, sowie durch einen in der Hülse 35 drehbaren Achszapfen 37, der in Augen 38 in Bohrungen 39 der Seitenteile 25 eingreift und darin gesichert sein kann. Ggfs. sind aus Gründen der Leichtgängigkeit in der Hülde 35 Gleitlagerbuchsen enthalten.

Die Maschinengestell-Gelenkachse 19 könnte auch parallel zur Tragrahmen-Gelenkachse 18 ausgerichtet sein. Die in das Doppelgelenk D integrierte Blockiervorrichtung 20 könnte gegenüber der gezeigten abgewandelt oder durch eine andere Blockiervorrichtung ersetzt sein, die an anderer Stelle den Träger 8 mit dem Maschinengestell 17 verblocken kann. Der Hebelarm zwischen der Tragrahmen-Gelenkachse 18 und der Achse 26 ist länger als der Hebelarm zwischen der Achse 26 und der Maschinengestell-Gelenkachse 19. Die Drehachse des Werkzeugkreisels 1 schneidet in etwa die Achse 26. Der Maschinenschwerpunkt sollte in etwa unterhalb der Blockiervorrichtung 20 liegen. Das Fahrwerk 4 ist mittels einer nicht gezeigten Vorrichtung jeweils auf die Fahrtrichtung ausrichtbar. Bei drei Bodenlaufrädern 13 liegt das einzelne Rad in Fahrtrichtung vorne.

## Patentansprüche

1. Heuwerbungsmaschine, insbesondere Kreiselschwader für Heckanbau an einen Schlepper, mit einem die Bodenlaufräder aufweisende Maschine (M) am Maschinengestell (17) führenden und mit einer Haltevorrichtung des Schleppers seitlich ausschwenkbar verbindbaren Tragrahmen (T, 8), und mit einem zwischen dem Maschinengestell (17) und dem Tragrahmen (T, 8) vorgesehenen Gelenkbereich (G) mit mindestens einer quer zum Tragrahmen (T, 8) und in etwa bodenparallelen Maschinengestell Gelenkachse (19), **dadurch gekennzeichnet**, daß im Gelenkbereich (G) eine zur Maschinegestell-Gelenkachse (19) beabstandete Tragrahmen-Gelenkachse (18) vorgesehen ist, und daß der Tragrahmen (T, 8) mit dem Maschinengestell (17) durch ein Zwischengehäuse (Z) verbunden ist, das - jeweils schwenkbar - für Höhenbewegungen der Maschine (M) relativ zum Tragrahmen (T, 8) an der Tragrahmen-Gelenkachse (18) und für Pendelbewegungen der Maschine (M) um die Maschinengestell-Gelenkachse (19) relativ zum Tragrahmen (T, 8) an der Maschinengestell-Gelenkachse (19) angelenkt ist.

2. Heuwerbungsmaschine nach Anspruch 1, **dadurch gekennzeichnet**, daß zwischen dem Tragrahmen (T, 8) und dem Maschinengestell (17) eine wahlweise ein- und ausrückbare Blockiervorrichtung (20) vorgesehen ist, mit der das Maschinengestell (17), vorzugsweise in etwa parallel zum Tragrahmen (T, 8), am Tragrahmen (T) verblockbar ist.

3. Heuwerbungsmaschine nach Anspruch 2, **dadurch gekennzeichnet**, daß die ausgerückte Blockiervorrichtung (20) eine Schwenkbegrenzungsvorrichtung des Maschinengestells (17) um die Tragrahmen-Gelenkachse (18) und um die Maschinengestell-Gelenkachse (19) bildet.

4. Heuwerbungsmaschine nach wenigstens einem der Ansprüche 1 bis 3, **dadurch gekennzeichnet**, daß die Maschinengestell-Gelenkachse (19) - in zum Tragrahmen (T, 8) paralleler Lage des Maschinengestells (17) gesehen - in einer zur Tragrahmen-Gelenkachse (18) parallelen Ebene und unter einem spitzen Winkel (α) gegenüber der Tragrahmen-Gelenkachse (18) angestellt ist, derart, daß bei seitlich mit einem Winkel (α) kleiner als 90° (90° - α) ausgeschwenkten Tragrahmen (T, 8) die Maschinengestell-Gelenkachse (19) parallel zur Fahrtrichtung liegt.

5. Heuwerbungsmaschine nach Anspruch 1, **dadurch gekennzeichnet**, daß am Zwischengehäuse (Z) und/oder am Tragrahmen (T, 8) ein Begrenzungsanschlag (A) für die Schwenkbewegung des Zwischengehäuses (Z) vorgesehen ist, mit der das Zwischengehäuse (Z) in Senkrichtung um die Tragrahmen-Gelenkachse (18) am Tragrahmen (T, 8) abfangbar ist.

6. Heuwerbungsmaschine nach Anspruch 2, **dadurch gekennzeichnet**, daß die Blockiervorrichtung (20) ein im Maschinengestell (17) um eine zur Tragrahmen-Gelenkachse (18) parallele Achse (26) zwischen einer Blockierstellung I und einer Passivstellung II schwenkbaren Riegel (29) aufweist, und daß am Tragrahmen (T) eine Riegelaufnahme (34) vorgesehen ist, an der der Riegel (29) in der Blockierstellung I bei am Begrenzungsanschlag (A) abgefangenem Zwischengehäuse (Z) zum Angriff bringbar ist.

7. Heuwerbungsmaschine nach den Ansprüchen 2, 3 und 6, **dadurch gekennzeichnet**, daß die Achse (26) des Riegels (29) in Hochschwenkrichtung des Maschinengestells (17) um die Tragrahmen-Gelenkachse (18) auf ein Widerlager (W) am Tragrahmen (T) ausgerichtet ist.

8. Heuwerbungsmaschine nach den Ansprüchen 6 und 7, **dadurch gekennzeichnet**, daß die Riegelaufnahme (34) gleichzeitig als das Widerlager (W) für die Achse (26) ausgebildet ist.

9. Heuwerbungsmaschine nach Anspruch 6, **dadurch gekennzeichnet**, daß der Riegel (29) aus einer die Achse (26) bildenden Welle (40) und einem zur Welle (40) parallelen Riegelbolzen (41) besteht, der mit Armen (30) an der Welle (40) gehalten ist, daß an der Welle (40) und/oder am Riegelbolzen (41) eine Feder (27) angreift, die den Riegelbolzen (41) über einen Totpunkt jeweils in die Blockier- und in die Passivstellung des Riegels (29) beaufschlagt.

10. Heuwerbungsmaschine nach wenigstens einem der Ansprüche 1 bis 9, **dadurch gekennzeichnet**, daß das Zwischengehäuse (Z) umgekehrt U-förmigen Querschnitt mit zwei einen Träger (8) des Tragrahmen (T) einschließenden, auf der Tragrahmen-Gelenkachse (18) gelagerten und über das Trägerende vorstehenden Wangen (21) und einen oberen, den Begrenzungsanschlag (A) bildenden Querschenkel (22) aufweist, daß die Maschinengestell-Gelenkachse (19) die Wangen (21) außerhalb des Trägerendes durchsetzt, und daß das Maschinengestell (17) einen wannenförmigen, oben offenen Oberteil (6) mit Seitenteilen (25) aufweist, die die Wangen (21) zwischen sich aufnehmen, in die die Maschinengestell-Gelenkachse (19) eingreift, und in denen die Welle (40) des Riegels (29) gelagert ist.

11. Heuwerbungsmaschine nach Anspruch 10, **dadurch gekennzeichnet**, daß die Maschinengestell-Gelenkachse (19) eine in den Wangen (21) festgelegte Hülse (35) und einen in der Hülse (35) drehbar gelagerten, beidseitig über die Hülse (35) überstehenden und einen in den Seitenteilen (25) angebrachten Augen (38) eingreifenden Achszapfen (37) aufweist.

12. Heuwerbungsmaschine nach wenigstens einem der Ansprüche 1 bis 11, **dadurch gekennzeichnet**, daß zur Schwenkbebrenzung des Maschinengestells (17) um die Maschinengestellachse (19) relativ zum Zwischengehäuse (Z) in den Wangen (21) annähernd zur Maschinengestell-Gelenkachse (19) konzentrische Langlöcher (32) vorgesehen sind, in die die Welle (40) mit Spiel eingreift, und daß in den Wangen (21) annähernd dreieckige Durchbrüche (31) vorgesehen sind, die der Riegelbolzen (41) durchsetzt und die Blockierstellung I und die Passivstellung II des Riegels (29) definieren.

## Claims

1. Hay-making machine, more especially a rotary-type windrower for attachment to the rear of a tractor, including a supporting frame (T, 8), which guides the machine (M), having ground running wheels, on the machine base (17) and is laterally outwardly pivotably connectable to a means for supporting the tractor, and including a pivotal region (G), which is provided between the machine base (17) and the supporting frame (T, 8) and has at least one machine base pivotal axis (19), which extends transversely relative to the supporting frame (T, 8) and is substantially parallel to the ground, characterised in that a supporting frame pivotal axis (18), which is spaced from the machine base pivotal axis (19), is provided in the pivotal region (G), and in that the supporting frame (T, 8) is connected to the machine base (17) by an intermediate housing (Z) which is articulated to the supporting frame pivotal axis (18) for vertical movements of the machine (M) relative to the supporting frame (T, 8) and to the machine base pivotal axis (19) for oscillatory movements of the machine (M) about the machine base pivotal axis (19) relative to the supporting frame (T, 8) - in a pivotable manner in each case.

2. Hay-making machine according to claim 1, characterised in that a selectively engageable and disengageable locking device (20) is provided between the supporting frame (T, 8) and the machine base (17), and the machine base (17) is interlockable on the supporting frame (T) by said device, preferably substantially parallel to the supporting frame (T, 8).

3. Hay-making machine according to claim 2, characterised in that the disengaged locking device (20) forms a means for limiting the pivotal movement of the machine base (17) about the supporting frame pivotal axis (18) and about the machine base pivotal axis (19).

4. Hay-making machine according to at least one of claims 1 to 3, characterised in that the machine frame pivotal axis (19) - when viewed with respect to the position of the machine frame (17) parallel to the supporting frame (T, 8) - is orientated in a plane parallel to the supporting frame pivotal axis (18) and at an acute angle (α) relative to the supporting frame pivotal axis (18) in such a manner that, when the supporting frame (T, 8) has been laterally outwardly pivoted at an angle (α) of less than 90° (90° - α), the machine base pivotal axis (19) lies parallel to the direction of travel.

5. Hay-making machine according to claim 1, characterised in that a limit stop (A) for the pivotal movement of the intermediate housing (Z) is provided on the intermediate housing (Z) and/or on the supporting frame (T, 8), the intermediate housing (Z) being clampable to the supporting frame (T, 8) by said movement in the downward direction about the supporting frame pivotal axis (18).

6. Hay-making machine according to claim 2, characterised in that the locking device (20) includes a bar (29), which is pivotable in the machine base (17) about an axis (26), which is parallel to the supporting frame pivotal axis (18), between a locking position I and an idle position II, and in that a bar receiver (34) is provided on the supporting frame (T), the bar (29) being engageable with said receiver in the locking position I when the intermediate housing (Z) is clamped to the limit stop (A).

7. Hay-making machine according to claims 2, 3 and 6, characterised in that, in the upward pivotal direction of the machine base (17), the axis (26) of the bar (29) about the supporting frame pivotal axis (18) is orientated towards an abutment (W) on the supporting frame (T).

8. Hay-making machine according to claims 6 and 7, characterised in that the bar receiver (34) is configured simultaneously as the abutment (W) for the axis (26).

9. Hay-making machine according to claim 6, characterised in that the bar (29) comprises a shaft (40), which forms the axis (26), and a locking pin (41), which is parallel to the shaft (40) and is retained on the shaft (40) by means of arms (30), and in that a spring (27), which urges the locking pin (41) via a dead centre into the locking position and into the idle position respectively of the bar (29), co-operates with the shaft (40) and/or with the locking pin (41).

10. Hay-making machine according to at least one of claims 1 to 9, characterised in that the intermediate housing (Z) has an inverted U-shaped cross-section with two side walls (21), which enclose a carrier (8) for the supporting frame (T), said side walls being mounted on the supporting frame pivotal axis (18) and protruding beyond the carrier end, and [has] an upper transverse web (22), which forms the limit stop (A), in that the machine base pivotal axis (19) extends through the side walls (21) externally of the carrier end, and in that the machine base (17) includes a trough-shaped upper portion (6), which is open at its upper end and has lateral portions (25) accommodating the side walls (21) therebetween, the machine base pivotal axis (19) engaging in said side walls, and the shaft (40) of the bar (29) being mounted in said side walls.

11. Hay-making machine according to claim 10, characterised in that the machine base pivotal axis (19) has a sleeve (35), which is secured in the side walls (21), and an axle journal (37), which is rotatably mounted in the sleeve (35), said journal protruding beyond the sleeve (35) at both ends and engaging in lugs (38) provided in the lateral portions (25).

12. Hay-making machine according to at least one of claims 1 to 11, characterized in that, to limit the pivotal movement of the machine base (17) about the machine base axis (19) relative to the intermediate housing (Z), elongate slots (32) are provided in the side walls (21), said slots being approximately concentric relative to the machine base pivotal axis (19), the shaft (40) engaging in said slots with some clearance, and in that approximately triangular openings (31) are provided in the side walls (21), the locking pin (41) extending through said openings, and said openings defining the locking position I and the idle position II of the bar (29).

## Revendications

1. Machine de fenaison, en particulier andaineuse centrifuge à ajouter à l'arrière d'un tracteur avec une machine (M) présentant des roues parcourant le sol conduisant sur le châssis de la machine (17) et avec un cadre porteur (T, 8), pouvant être relié à un dispositif de retenue du tracteur en pouvant être pivoté latéralement, et avec une zone d'articulation G prévue entre le châssis de la machine (17) et le cadre porteur (T, 8), avec au moins un axe d'articulation (19) du châssis de la machine transversal au cadre porteur (T, 8) et à peu près parallèle au sol, caractérisée en ce que dans la zone d'articulation (G); un axe d'articulation (18) du cadre porteur à une certaine distance de l'axe d'articulation (19) du châssis de la machine est prévu et en ce que le cadre porteur (T, 8) est relié au châssis de la machine (17) par un bâti intermédiaire (Z) qui est articulé, de toute façon pivotante, pour des mouvements en hauteur de la machine (M) relativement au cadre porteur (T, 8) sur l'axe d'articulation (18) du cadre porteur et pour des mouvements pendulaires de la machine (M) autour de l'axe d'articulation (19) du châssis de la machine relativement au cadre porteur (T, 8) sur l'axe d'articulation (19) du châssis de la machine.

2. Machine de fenaison selon la revendication 1, caractérisée en ce qu'entre le cadre porteur (T, 8) et le châssis de la machine (17) est prévu un dispositif de blocage (20) pouvant être au choix engagé ou dégagé, au moyen duquel le châssis (17) de la machine peut être bloqué avantageusement à peu près parallèlement au cadre porteur (T, 8), sur le cadre porteur (T).

3. Machine de fenaison selon la revendication 2, caractérisée en ce que le dispositif dégagé de blocage (20) forme un dispositif de limitation du pivotement du châssis de la machine (17) autour de l'axe d'articulation (18) du cadre porteur et autour de l'axe d'articulation du châssis de la machine (19).

4. Machine de fenaison selon au moins l'une des revendications 1 à 3, caractérisée en ce que l'axe d'articulation (19) du châssis de la machine, en regardant à une position du châssis de la machine (17) parallèle au cadre porteur (T, 8), est placé dans un plan parallèle à l'axe d'articulation (18) du cadre porteur et avec un angle aigu α vis-à-vis de l'axe d'articulation (18) du cadre porteur de façon à ce qu'avec le cadre porteur (T, 8) pivoté vers l'extérieur sur un angle α plus petit que 90° (90°-α), l'axe d'articulation (19) du châssis de la machine se trouve parallèle au sens de la marche.

5. Machine de fenaison selon la revendication 1 caractérisée en ce que sur le bâti intermédiaire (Z) et/ou sur le cadre porteur (T, 8) est prévue une butée de limitation (A) du mouvement de pivotement du bâti intermédiaire (Z), par laquelle le bâti intermédiaire (Z) peut être coincé en direction d'abaissement autour de l'axe d'articulation (18) du cadre porteur sur le cadre porteur (T, 8).

6. Machine de fenaison selon la revendication 2, caractérisée en ce que le dispositif de blocage (20) présente un verrou (29) pouvant pivoter dans le bâti (17) de la machine autour d'un axe parallèle à l'axe d'articulation du cadre porteur (18) entre une position de blocage I et une position passive II, et en ce que sur le cadre porteur est prévu un logement (34) pour le verrou, dans lequel peut être enclenché le verrou (29) à la position de blocage I alors que le bâti intermédiaire (Z) est coincé contre la butée de limitation (A).

7. Machine de fenaison selon les revendications 2, 3 et 6 caractérisée en ce que l'axe (26) du verrou (29) est dirigé, dans la direction de pivotement vers le haut du bâti (17) de la machine? autour de l'axe d'articulation (18) du cadre porteur contre une butée (W) sur le cadre porteur (T).

8. Machine de fenaison selon les revendications 6 et 7, caractérisée en ce que le logement (34) du verrou est configuré simultanément en tant que butée (W) pour l'axe (26).

9. Machine de fenaison selon la revendication 6, caractérisée en ce que le verrou (29) se compose d'un arbre (40) formant l'axe (26) et d'un boulon de verrouillage (41) parallèle à l'arbre (40), qui est maintenu par des bras (30) sur l'arbre (40) en ce que sur l'arbre (40) et/ou sur le boulon de verrouillage (41) agit un ressort (27) qui sollicite le boulon de verrouillage (41) au-delà d'un point mort dans la position de blocage et dans la position passive du verrou (29).

10. Machine de fenaison selon au moins l'une des revendications 1 à 9, caractérisée en ce que le bâti intermédiaire (Z) présente une section transversale en forme de U inversé avec deux ailes (21) incorporant une poutre (8) du cadre porteur (T), logées sur l'axe d'articulation (18) du cadre porteur et dépassant au-delà de l'extrémité de la poutre et une branche transversale (22) supérieure formant la butée de limitation (A) en ce que l'axe d'articulation (19) du châssis de la machine traverse les ailes (21) à l'extérieur de l'extrémité de la poutre et en ce que le châssis de la machine (17) présente une partie supérieure ouverte (6) en forme de bassine avec des parties latérales (25) qui reçoivent les ailes (21) entre elles, dans laquelle pénètre l'axe d'articulation (19) du bâti de la machine et où est logé l'arbre (40) du verrou (29).

11. Machine de fenaison selon la revendication 10, caractérisée en ce que l'axe d'articulation (19) du châssis de la machine présente un manchon (35) fixé dans les ailes (21) et un tourillon (37) logé rotatif dans le manchon (35), dépassant des deux côtés du manchon (35) et pénétrant dans des oeillets (38) prévus dans les parties latérales (25).

12. Machine de £enaison selon au moins l'une des revendications 1 à 11, caractérisée en ce que pour la limitation du pivotement du châssis (17) de la machine autour de l'axe (19) du châssis de la machine relativement au bâti intermédiaire (Z) sont prévus, dans les ailes (21), des trous oblongs (32) pratiquement concentriques à l'axe d'articulation (19) du châssis de la machine, dans lesquels pénètre l'arbre (40) avec un certain jeu et en ce que dans les ailes (21) sont prévues des interruptions (31) presque triangulaires que traversent le boulon de verrouillage (41) et qui définissent la position de blocage (1) et la position passive (2) du verrou (29).
